# EUROPÄISCHE PATENTSCHRIFT

(11) **EP 2 245 036 B1**
(45) Veröffentlichungstag und Bekanntmachung des Hinweises auf die Patenterteilung: **21.09.2011**
(21) Anmeldenummer: 09715627.7
(22) Anmeldetag: 16.02.2009
(51) Int. Cl.: C07F 7/12

(54) **VERFAHREN ZUR HERSTELLUNG VON ALKYLCHLORSILANEN AUS DEN RÜCKSTÄNDEN DER DIREKTSYNTHESE VON ALKYLCHLORSILANEN**
METHOD FOR PRODUCING ALKYL CHLOROSILANES FROM THE RESIDUES OF THE DIRECT SYNTHESIS OF ALKYL CHLOROSILANES
PROCÉDÉ DE PRODUCTION D'ALKYLCHLOROSILANES À PARTIR DES RÉSIDUS DE LA SYNTHÈSE DIRECTE D'ALKYLCHLOROSILANES

(30) Priorität: 26.02.2008 DE 102008000410
(43) Veröffentlichungstag der Anmeldung: 03.11.2010
(73) Patentinhaber: Wacker Chemie AG, 81737 München (DE)
(72) Erfinder: BÖCK, Manfred, 84489 Burghausen (DE); FUCHS, Paul, A-5231 Schalchen (AT); MAUTNER, Konrad, 01594 Riesa (DE)
(74) Vertreter: Fritz, Helmut
(86) Internationale Anmeldenummer: PCT/EP2009/051771
(87) Internationale Veröffentlichungsnummer: WO 2009/106447

(56) Entgegenhaltungen:
- DE-A1- 19 711 693
- DE-C1- 10 039 172
- US-A- 2 681 355

## Beschreibung

Die Erfindung betrifft ein Verfahren zur Herstellung von Alkylchlorsilanen aus den Rückständen der Direktsynthese von Alkylchlorsilanen durch Erhitzen mit Wechselstrom.

Bei der Direktsynthese von Alkylchlorsilanen der allgemeinen Formel RₐH_{b}SiC1_{4-a-b}, bei der a die Wertigkeit 1, 2, 3 oder 4, b die Werte 0, 1 oder 2 bedeuten, aus Siliciummetall und Alkylchloriden RCl, wobei R einen Alkylrest bedeutet, entstehen als Nebenprodukte Oligosilane, Carbosilane, Siloxane und hochsiedende Crackprodukte. Darüber hinaus enthalten die Rückstände Feststoffe aus der Direktsynthese, die als Feinstanteil durch Cyclone und Filter nicht zurückgehalten werden. Diese Feststoffe bestehen aus Silicium, Metallen und deren Verbindungen, Metallsiliciden und Ruß.

Den überwiegenden Teil dieser Rückstände machen die Oligosilane aus, besonders die Disilane der allgemeinen Formel R_{c}Cl_{6-c}Si₂, in der c die Werte 0 bis 6 bedeutet, aus. Es können aber auch Silanverbindungen mit mehr als 2 Si-Si-Bindungen wie Trisilane oder Silamethylene enthalten sein.

In US 2,598,435 ist ein Verfahren beschrieben, bei dem aus Rückständen aus der Direktsynthese von Methylchlorsilanen, die Methylhalogenpolysilane enthalten, bei Temperaturen von 250-800°C Methylchlormonosilane erhalten werden.

In einer Vielzahl von Schriften, wie z. B. EP 1505070 und dort zitierten Veröffentlichungen sind Verfahren beschrieben, bei denen Rückstände aus der Direktsynthese von Alkylchlorsilanen mit Zusätzen von HCl und/oder H₂ und unter Einsatz z. T. komplexer Katalysatorsysteme zu Alkylchlormonosilanen gespalten werden.

In US 2,681,355 ist ein kontinuierliches Verfahren beschrieben, bei dem unkatalysiert und rein thermisch Rückstände aus der Direktsynthese von Methylchlorsilanen in einem von außen beheizten Rohr mit HCl bei Temperaturen von 400 bis 900°C unter Bildung von monomeren Silanen umgesetzt wird. Dabei werden große Mengen an Nebenprodukten, wie z. B. Carbosilane und Polymere, sowie Feststoffe durch Verkokung der Rückstände an heißen Reaktorwänden gebildet.

In DE 19711693 ist ein kontinuierliches Verfahren beschrieben, bei dem Alkylchlorsilane aus den Rückständen der Direktsynthese von Alkylchlorsilanen, die flüssige Bestandteile mit einem Siedepunkt > 70°C und Feststoffe aufweisen, mit HCl bei 300-800°C in einem Rohrreaktor mit drehbaren Einbauten hergestellt werden. Die drehbaren Einbauten werden benötigt, um durch Verkokung entstehende Anbackungen an den Reaktorwänden abzuscheren.

Es bestand die Aufgabe, ein Verfahren zur Herstellung von Alkylchlorsilanen aus den Rückständen der Direktsynthese von Alkylchlorsilanen bereitzustellen, welches durch rein thermische Behandlung und ohne weitere Zusätze wie z. B. Chlorwasserstoff, Wasserstoff oder Katalysatoren eine hohe Ausbeute an Alkylchlorsilanen liefert, sowie gleichzeitig eine Verkokung der Rückstände und Belagsbildung an heißen Reaktorwänden verhindert.

Gegenstand der Erfindung ist ein Verfahren zur Herstellung von Alkylchlorsilanen aus den Rückständen der Direktsynthese von Alkylchlorsilanen, welche flüssige Bestandteile mit einem Siedepunkt von mindestens 70°C bei 1013 hPa und weitere Bestandteile aufweisen, die ausgewählt werden aus Metallen und deren Verbindungen; bei dem das Reaktionsgemisch in einem Druckreaktor durch Durchleiten von Wechselstrom auf eine Reaktionstemperatur von 200 bis 500°C aufgeheizt wird.

Das Verfahren liefert aus Rückständen der Direktsynthese von Alkylchlorsilanen verwertbare Monosilane. Dabei werden bevorzugt höhermolekulare Bestandteile der Rückstände in Monosilane gespalten. Vorzugsweise werden im Verfahren keine Katalysatoren benötigt und keine weiteren Einsatzstoffe eingesetzt. Feststoffablagerungen an den Reaktorwänden werden weitestgehend vermieden.

Vorzugsweise werden Methylchlorsilane der allgemeinen Formel MeₐH_{b}SiCl_{4-a-b} hergestellt, in der Me einen Methylrest, a die Werte 1, 2 oder 3 und b die Werte 0 oder 1 bedeuten.

Im wesentlichen weisen die Rückstände der Direktsynthese flüssige Bestandteile mit einem Siedepunkt von mindestens 70°C, insbesondere mindestens 100°C bei 1013 hPa und Metalle oder deren Verbindungen in gelöster oder fein suspendierter Form auf. Insbesondere weisen die Rückstände Metalle aus der Gruppe Al, Cu, Zn, Sn, Fe, Ti und/oder deren Verbindungen auf. Die Rückstände können noch weitere Feststoffe, wie Silicium und Ruß enthalten. Meistens enthält der Rückstand Disilane.

Die Rückstände werden diskontinuierlich oder kontinuierlich in einen Druckreaktor eingebracht und durch Durchleiten von Wechselstrom auf die zur Umsetzung erforderliche Temperatur aufgeheizt.

Der Reaktor wird bevorzugt bei mindestens 250°C und vorzugsweise höchstens 350°C betrieben.

Der Druck beträgt vorzugsweise mindestens 20 bar, insbesondere mindestens 30 bar und vorzugsweise höchstens 100 bar, insbesondere höchstens 80 bar.

Das Reaktionsprodukt wird vorzugsweise kondensiert, gegebenenfalls von Feststoffen befreit und kann dem bei der Direktsynthese erzeugten Alkylchlorsilangemisch wieder zugeführt werden oder auch separat in Reinsubstanzen aufgetrennt werden.

### Beispiel

Soweit nicht anders angegeben sind alle Mengen und Prozentangaben auf das Gewicht bezogen. Me bedeutet Methylrest.

Ein hochsiedender Rückstand aus der Direktsynthese von Methylchlorsilanen wurde eingesetzt, der laut GC bestand aus: 54% Disilanen (Mischung aus 1,1,1,2,2,2 Hexamethyldisilan, 1-Chlorpentamethyldisilan, 1,1-Dichlortetramethyldisilan, 1,2-Dichlortetramethyldisilan, 1,1,2-Trichlortrimethyldisilan und 1,1,2,2-Tetrachlordimethyldisilan),
9% Trisilanen der allgemeinen Formel
ClₐMe₃₋ₐSi(Cl_{b}Me_{2-b})SiSiCl_{c}M_{e3-c}, wobei a und c jeweils 0-3 und b 0-2 bedeuten.
7% Silamethylenen (Carbosilane) der allgemeinen Formel ClₐMe₃₋ₐSiCH₂SiMe_{3-b}Cl_{b}, wobei a und b jeweils 0-3 bedeuten,
2% Metallen und Metallverbindungen (insbesondere Al, Zn, Sn, Fe, Ti)
2% Alkylchlorsilanen, sowie
26% nicht identifizierten Verbindungen in jeweils geringer Konzentration.

Der hochsiedende Rückstand wurde flüssig in einen Autoklaven mit einem Volumen von 0,92 1 dosiert. Das Reaktionsgemisch wurde durch Durchleiten von Wechselstrom auf 270°C aufgeheizt und 180 Min. bei dieser Temperatur gehalten.

Der Autoklav wurde auf Umgebungstemperatur abgekühlt. Das Produktgemisch wurde entnommen und über GC analysiert:
51,7% Methylchlorsilane, davon
40,4% Dichlordimethylsilan
7,2% Trichlormethylsilan
2,5% Chlortrimethylsilan
1,4% Dichlormethylsilan
0,5% nicht gespaltene Disilane
6,8% Silamethylene
41% nicht identifizierte Verbindungen

Die Reaktorwand und der Reaktorboden war nur mit sehr wenig Feststoff belegt. Der Feststoff war feinteilig und mechanisch leicht zu entfernen.

## Patentansprüche

1. Verfahren zur Herstellung von Alkylchlorsilanen aus den Rückständen der Direktsynthese von Alkylchlorsilanen, welche flüssige Bestandteile mit einem Siedepunkt von mindestens 70°C bei 1013 hPa und weitere Bestandteile aufweisen, die ausgewählt werden aus Metallen und deren Verbindungen, bei dem das Reaktionsgemisch in einem Druckreaktor durch Durchleiten von Wechselstrom auf eine Reaktionstemperatur von 200 bis 500°C aufgeheizt wird.

2. Verfahren nach Anspruch 1, bei dem Methylchlorsilane der allgemeinen Formel MeₐH_{b}SiCl_{4-a-b} hergestellt werden, in der Me einen Methylrest, a die Werte 1, 2 oder 3 und b die Werte 0 oder 1 bedeuten.

3. Verfahren nach Anspruch 1 oder 2, bei dem im Rückstand Disilane enthalten sind.

4. Verfahren nach Anspruch 1 bis 3, bei dem keine weiteren Einsatzstoffe oder Katalysatoren zugesetzt werden.

5. Verfahren nach Anspruch 1 bis 4, welches bei Drücken von 20 bis 100 bar durchgeführt wird.

## Claims

1. Process for producing alkylchlorosilanes from the residues from the direct synthesis of alkylchlorosilanes, which comprise liquid constituents with a boiling point of at least 70°C at 1013 hPa and further constituents, which are selected from metals and compounds thereof, in which the reaction mixture is heated in a pressurized reactor to a reaction temperature of from 200 to 500°C via passage of alternating current.

2. Process according to Claim 1, in which methylchlorosilanes of the general formula MeₐH_{b}SiCl_{4-a-b} are produced, in which Me is a methyl moiety, a is 1, 2, or 3, and b is 0 or 1.

3. Process according to Claim 1 or 2, in which disilanes are present in the residue.

4. Process according to any of Claims 1 to 3, in which no further starting materials or catalysts are added.

5. Process according to any of Claims 1 to 4, which is conducted at pressures of from 20 to 100 bar.

## Revendications

1. Procédé pour la préparation d'alkylchlorosilanes à partir des résidus de la synthèse directe d'alkylchlorosilanes, qui comportent des composants liquides ayant un point d'ébullition d'au moins 70 °C sous 1 013 hPa et d'autres composants qui sont choisis parmi des métaux et leurs composés, dans lequel on chauffe, en faisant passer du courant alternatif, le mélange réactionnel à une température de réaction de 200 à 500 °C dans un réacteur tenant la pression.

2. Procédé selon la revendication 1, dans lequel on prépare des méthylchlorosilanes de formule générale MeₐH_{b}SiCl_{4-a-b}, dans laquelle Me représente un radical méthyle, a représente les valeurs 1, 2 ou 3 et b représente les valeurs 0 ou 1.

3. Procédé selon la revendication 1 ou 2, dans lequel des disilanes sont contenus dans le résidu.

4. Procédé selon l'une quelconque des revendications 1 à 3, dans lequel on n'ajoute pas d'autres substances de départ ni de catalyseurs.

5. Procédé selon l'une quelconque des revendications 1 à 4, qui est effectué sous des pressions de 20 à 100 bars.
